# EUROPEAN PATENT SPECIFICATION

(11) **EP 4 567 613 B1**
(45) Date of publication and mention of the grant of the patent: **11.11.2026**
(21) Application number: 23213959.2
(22) Date of filing: 04.12.2023
(51) Int. Cl.: G06F 13/38

(54) **A DEVICE, A DATA STRUCTURE AND A METHOD FOR PACKETIZING OF DATA**
VORRICHTUNG, DATENSTRUKTUR UND VERFAHREN ZUR PAKETIERUNG VON DATEN
DISPOSITIF, STRUCTURE DE DONNÉES ET PROCÉDÉ DE MISE EN PAQUETS DE DONNÉES

(43) Date of publication of application: 11.06.2025
(60) Divisional application: 26160619.8 / 4 726 561
(73) Proprietor: Stichting IMEC Nederland, 5656 AE Eindhoven (NL)
(72) Inventor: HE, Yuming, 5623 EN Eindhoven (NL); LIU, Yao-Hong, 5655 JV Eindhoven (NL); VAN DER VEN, Stan Antonius Martinus, 5341 PD Oss (NL); LIAW, Hua-Peng, 5038 VZ Tilburg (NL)
(74) Representative: AWA Sweden AB

(56) References cited:
- US-A1- 2010 191 525
- US-A1- 2019 286 592

## Description

### Technical field

The present description relates to packetizing of data from sensors. The present description relates to a device, a data structure, and a method for packetizing of data.

The project leading to this application has received funding from the European Research Council (ERC) under the European Union's Horizon 10 2020 research and innovation programme (grant agreement No 101001448) and under Horizon Europe research and innovation programme (grant agreement No 101138283).

### Background

Array-based sensing systems, which may for instance be used in imaging or in detecting electrical signals, are becoming increasingly popular in a variety of applications. There is an increasing demand for more detailed information, corresponding to increasing number of channels in the array-based sensing systems and increasing resolution of information.

For instance, the array-based sensing systems may be intended to be used in a remote location for collecting information in a location which may be hard to access. Thus, it is desired that the array-based sensing systems can be deployed without need of maintenance for a very long time. Thus, the array-based sensing systems may need a long lifetime and a long battery time, such that a low power consumption of the array-based sensing system is critical. Array-based sensing systems may also be used in implanted devices for sensing a biological signal, wherein a long lifetime and a long battery time is also crucial.

Thus, there is a need for efficient handling of information generated by sensors, such as sensors arranged in an array-based sensing systems, so as to facilitate a long lifetime of the sensors.

US 2019/0286592 A1 discloses chips used to receive and process neurological events in brain matter as captured by electrodes. Such chips may include an array of amplifiers and electrodes to receive neurological voltage signals, the chip including a config circuitry in communication with the array of amplifiers and a controller, the config circuitry configured to receive program instructions and instruct the amplifiers of a voltage threshold and instruct the controller to pass on signals from only specific rows and columns of amplifiers, the controller in communication with the array of amplifiers, the controller configured to packetize the neurological voltage signals into data packets.

### Summary

An objective of the present description is to provide efficient processing of information generated by a plurality of sensors. A particular objective of the present description is to provide packetizing of data from a plurality of sensors using a low power consumption.

These and other objectives are at least partly met by the invention as defined in the independent claims. Preferred embodiments are set out in the dependent claims.

According to a first aspect, there is provided a device for packetizing of data from a set of sensors, said device comprising: a plurality of analog-to-digital converters (ADCs), each connected to a subset of one or more sensors for receiving input from the subset of sensors, wherein each ADC comprises one or more channels, wherein each channel is dedicated to a respective sensor in the subset; a serializer for generating a data packet comprising one data entry or a series of data entries, wherein the or each data entry represents information from one channel of the ADCs; a clock generator for generating a clock signal for controlling generating of the data packet by the serializer; wherein the ADCs are configured to detect events, wherein each event corresponds to a change in a value of a sensor, wherein the ADCs are configured to output event information, wherein the clock generator is configured to receive an enable signal for initiating generation of a clock signal in response to at least one event being detected in a time frame; wherein the clock generator is configured to provide the clock signal to the serializer for generating the data packet, wherein the data packet comprises the event information output by the ADCs during the time frame.

The device for packetizing of data thus uses a clock generator which is only initiated when there is data to be transmitted. This implies that the device can use the clock generator intermittently such that power consumption of the device may be saved.

It should be realized that the clock generator for packetizing of data may need to provide a clock signal of a higher frequency than what is needed for a clock signal used by the ADCs. Thus, the ADCs may be controlled by a clock signal having a lower frequency than the clock signal generated by the clock generator for controlling packetizing of data. Thus, a high frequency clock signal may be provided only when needed.

The ADCs are configured to detect events. Thus, the device may be used for identifying when any data of interest is provided by the sensors. Hence, events may not be generated when signals from the sensors do not comprise any data of interest.

The intermittent use of the clock generator for packetizing of data may be useful for saving power consumption. This may be useful even when events are frequently occurring, such that there may even be events in each time frame. However, the intermittent use of the clock generator may be particularly efficient in saving power consumption if events are sparse and rarely occur.

For instance, if the sensors are used for sensing a biological signal, the information in the sensed biological signal may be very sparse. For instance, if a neural signal is monitored by a sensor, the sensor may during a major portion of time detect a constant signal due to the sensor sensing no neural activity. Only during short periods of time, the sensor will sense activity in the biological signal. Thus, the device may be advantageously used for packetizing of data from sensors that sense sparse signals, since the sensing of sparse signals may imply that there are events only in a small fraction of time frames. Since the clock generator is provided with the enable signal only if an event is detected in a time frame, the clock generator may be seldomly initiated when the sensors sense sparse signals. Thus, the device may provide a very low power consumption for packetizing of data representing sparse signals.

The low power consumption provided by the device is particularly advantageous for packetizing of data when power supply is limited. Thus, if the set of sensors are used in an implanted or wearable system, power consumption may be very limited. This implies that the device is particularly suited for such applications, providing a long lifetime of an implanted or wearable device.

The set of sensors comprises a plurality of sensors. The sensors may be arranged in an array, such as being regularly ordered in rows and/or columns in the array. However, it should be realized that the plurality of sensors in the set need not be arranged in any particular arrangement. The sensors may all be of a same type or may be of different types. For instance, some sensors may be configured to detect an electrical signal, whereas other sensors may be configured to detect an optical signal. This implies that the device may be configured to packetize data from different types of sensors, which may be configured to monitor a common object or scene. Each ADC may be associated with a single type of sensor, but different ADCs may be associated with different types of sensors.

For example, the set of sensors may correspond to an array of photo-sensitive elements configured to detect imaging information. Thus, each sensor may be a photo-sensitive element that detects an intensity of incident light. However, the set of sensors may alternatively correspond to electrodes arranged for detecting electrical signals, such as electrical signals propagating in tissue. In such case, the sensors may be arranged in an array allowing a spatial resolution of detecting electrical signals. However, the sensors may alternatively be arranged in different locations for detecting electrical signals in different locations, such as in different parts of a body.

The device is configured to receive signals from the set of sensors. This implies that the device may be connected to the sensors in the set for receiving the signals. The device may be integrated with the sensors or may be separate from the sensors and configured to receive signals from the sensors through one or more wires. The device may even be configured to receive signals from the one or more sensors using wireless communication with the one or more sensors.

Each ADC may be configured to receive input from a plurality of sensors. Thus, the subset of sensors connected to a common ADC may comprise two or more sensors. This implies that a single ADC may be used with a plurality of sensors. Thanks to not having an ADC for each sensor, the device may be implemented in a small area, as the number of ADCs needed may be reduced.

The ADCs may provide output in a plurality of channels, each dedicated to a single sensor. Thus, different channels are dedicated to different sensors. This implies that data for each sensor is provided in an individual channel allowing data from different sensors to be distinguished by using a channel identifier.

The ADCs may be configured to detect events corresponding to a change in value of a signal from a sensor. For instance, the ADCs may be configured to compare a current value of the signal from a particular sensor to a previous value of the signal from the particular sensor. When a difference between the current value and the previous value exceeds a threshold, an event may be detected. The difference may for instance correspond to a digital representation of the value of the signal being changed, i.e., at least a least significant bit of the digital representation being changed.

Thus, the ADCs may be configured to provide an output only when the signal from a sensor changes. The output of the ADCs may be provided in terms of event information, which may indicate a direction and a size of a change of the value of the sensor.

Thanks to the use of event information for representing information from the set of sensors, a data rate produced by the set of sensors may be reduced. Thus, values of the signal from the sensor may not be provided in each time instance. Rather, the signal from the sensor may only be represented when a change of the value of the signal occurs. This implies that the device may output a limited amount of data, such that data communication is limited. This is useful in limiting power consumption.

In an embodiment, the set of sensors may be a dynamic vision sensor camera, which is set up for only generating data from ADCs when a brightness level of a pixel (photo-sensitive element) changes. In another embodiment, the set of sensors may be an array of electrodes configured to detect electrical biological signals.

The data packet may comprise one or more data entries. The number of data entries may be dependent on the amount of available event information to be communicated. Thus, the length of the data packet may be dynamically set in dependence of the number of data entries to be communicated. This implies that the data packet need only be as long as necessary for communicating the information of interest. This may save memory usage and also save power consumption in communication of information.

Each data entry may represent information from one channel. Thus, information from different channels is provided in different data entries. The data packet may comprise a single data entry per channel for which event information is to be communicated. However, the data packet may alternatively comprise more than one data entry for the same channel. This may occur when there is more than one event for the same channel in a single time frame. For instance, if there is a large change in the value of the signal of a sensor, the data packet may comprise one data entry per bit of a plurality of bits representing the change in the value.

The time frame may correspond to a time resolution desired for representation of the signals from the sensors. Thus, a time frame corresponds to a time duration during which a single value for a single channel per ADC is to be determined. However, the ADCs may be configured to receive information from a plurality of sensors in a time-multiplexed manner. The time frame may then correspond to a time duration during which a single value for each of the channels of the ADCs is to be determined. As yet another alternative, the time frame may correspond to a time duration corresponding to several time points in the resolution to be provided for the signals from the sensors.

The ADCs may be configured to output event information for immediate packetizing. Thus, when an ADC has detected event information, the event information may be immediately provided for generating of a packet. The event information may be temporarily held to enable event information from the plurality of ADCs to be multiplexed into the data packet. This may be used when a very short time frame is used per data packet, i.e., that a data packet should represent information corresponding to a single time instance for a single channel per ADC.

However, the data packet may be used for possibly representing more than one value per ADC, such as enabling one value per channel of each ADC to be represented, wherein each ADC comprises more than one channel. If so, the event information may need to be stored for some time before it may be packetized into the data packet.

Thus, according to an embodiment, the device further comprises a memory configured to store information from each of the plurality of ADCs, wherein the ADCs are configured to output the event information for storing the event information in the memory, and wherein the serializer is configured to generate the data packet comprising the event information stored into the memory during the time frame.

The use of the memory implies that data packets may be used for communicating information from longer time frames. Thus, using the memory, the device may be configured to generate fewer data packets. Since each data packet may need header(s) and general information, the use of fewer data packets may imply that less information is communicated from the device.

However, the memory takes up physical space of the device. Thus, if the device needs to be as small as possible, the memory may be omitted.

According to an embodiment, each ADC is a level-crossing ADC (LC-ADC), wherein the LC-ADCs are configured to generate an up event in dependence of the value of the sensor increasing above an upper threshold and a down event in dependence of the value of the sensor decreasing below a lower threshold.

The use of LC-ADCs may be particularly useful for generating event information, since the LC-ADCs may be configured to compare the value of a signal from a sensor to a reference value based on a previous value of the signal. Thus, the LC-ADCs may be configured to immediately identify when there is a change in a value of a signal from a sensor.

The upper threshold and the lower threshold may be defined in relation to the previous value of the signal from the sensor.

The event information may be provided as a direction of change of the value of the signal (up or down) and a magnitude of the change. The event information may be provided in digital format, such that the magnitude of the change may correspond to the number of bits corresponding to the magnitude.

It should be realized that the ADCs need not necessarily be LC-ADCs. Also, all ADCs need not necessarily be of a same type. For instance, the ADCs may be ADCs configured to operate at Nyquist rate (Nyquist-rate ADCs). The Nyquist-rate ADC may further be combined with a delta modulator such that the delta modulator provides an output only when a value of a signal input to the Nyquist-rate ADC changes.

According to an embodiment, the serializer is configured to code an up event and/or a down event using different data values for different channels of the LC-ADCs.

Thus, each LC-ADC may be associated with a plurality of channels. The serializer may use codes that are dedicated to specific channels. Thus, a data entry may be provided as a sequence of bits that represent both the channel of the LC-ADC and the direction of the change of the value of the signal of the channel. This is an efficient manner of coding the information to be reported in the data packet.

According to an embodiment, the serializer is configured to include a plurality of data entries in the data packet corresponding to a plurality of events of a single channel in dependence of the value of the sensor corresponding to a plurality of up events and/or a plurality of down events during the time frame.

Thus, if the value of the analog signal of the sensor crosses a plurality of levels (corresponding to a change of a plurality of bits), a plurality of events may be coded into the data packet. This implies that a single data entry always indicates a change of a value of one bit, such that the magnitude of change is not coded into the data entry. Instead, if a large change occurs, a plurality of data entries is provided in the data packet.

This implies that each data entry needs fewer bits, since the data entry does not need to provide a magnitude of change of the signal. Hence, the single data entry may require fewer bits, such that the size of the data packet is small if only changes of one bit are indicated in the data packet. This is particularly useful if large changes in values of the signal are rare.

According to an embodiment, the clock generator is configured to be turned off for terminating output of the clock signal when the data packet has been generated.

Thus, the clock signal from the clock generator may be provided only during generation of the data packet. This implies that the clock signal which may be of a high frequency and require relatively high power consumption may be used only when needed and may be turned off as soon as the data packet, which needs to be quickly assembled, has been generated.

According to an embodiment, the device is configured to output the data packet to an external device in real time after the data packet has been generated.

This implies that the external device may receive the data packets in real time. Thus, the external device may associate a timing of an event detected by the sensor with a time point of receipt of the data packet. The data packet need not comprise a time stamp and a clock of the device for packetizing of data need not be synchronized with a clock of the external unit. This implies that complexity of achieving clock synchronization between the plurality of sensors and a receiving external unit may be avoided.

This is particularly useful when data packets are not generated for every time frame. A timing relation between the events may be determined in the external unit based on the time points of receipt of the data packets.

The data packet may be generated during a time frame following the time frame in which the at least one event was detected. The device may thus be configured to output the data packet to an external device in real time after the time frame in which that at least one event was detected.

According to an embodiment, the clock signal generated by the clock generator is a high frequency clock signal, and the ADCs are configured to receive a low frequency clock signal for controlling detection of events by the ADCs.

Thus, the ADCs which operate during each time frame may be controlled by a low frequency clock signal, whereas the packetizing of data, which is done intermittently, is controlled by a high frequency clock signal. Thus, the high frequency clock signal, which requires higher power consumption than the low frequency clock signal, may be generated intermittently. The clock generator may be configured to generate a high frequency clock signal that is equal to or larger than a maximum number of bits in a frame multiplied by a frame rate of the time frames. This may ensure that the data packet representing events of a time frame can be generated during the following time frame. This implies that event information is able to be provided into the data packet before the event information is overwritten by new events being detected by the ADCs in a following time frame.

According to an embodiment, the high frequency clock signal may be tunable such that the frequency of the clock signal may be increased based on an overload detector detecting that a data packet is not finished within a time frame.

According to an embodiment, the plurality of ADCs is configured to receive time-multiplexed input from each of a plurality of sensors in the respective subsets during a time frame, and the clock generator is configured to receive the enable signal after the time frame in dependence of any event being detected during the time frame.

This implies that each ADC comprises a plurality of channels. Each ADC is associated with a plurality of sensors such that the device may be implemented in a small area, as the number of ADCs needed may be reduced.

The device may further be configured to check input from each sensor during the time frame in order to check whether any event has occurred in any of the sensors associated with each ADC. Thus, the device may trigger generation of the data packet based on detection of event information in the input from any of the sensors of the set of sensors within the time frame. Hence, information from each of the sensors for which an event is detected in the time frame is provided within each data packet.

According to an example, there is provided a data structure for packetizing of data from a set of sensors, said data structure comprising: one data entry or a series of data entries, wherein the or each data entry represents information from one channel of a plurality of analog-to-digital converters (ADCs), wherein each data entry represents an event corresponding to a change in a value of a sensor associated with the channel; and wherein a number of data entries in the data structure is dependent on a number of events during a time frame.

Effects and features of this second aspect are largely analogous to those described above in connection with the first aspect. Embodiments mentioned in relation to the second aspect are largely compatible with the first aspect.

Thanks to the use of event information for representing information from the set of sensors, a data rate produced by the set of sensors may be reduced. Thus, values of the signal from the sensor may not be provided in each time instance. Rather, the signal from the sensor may only be represented when a change of the value of the signal occurs. This implies that the data structure may be used for outputting a limited amount of data, such that data communication is limited. This is useful in limiting power consumption.

In particular, the data structure need only be generated when there is any event information during a time frame. For time frames having no event information, no data structure needs to be generated.

Further, a size of the data structure is adapted to the amount of information that is to be communicated using the data structure. Thus, the number of data entries depends on the number of events and only event information is coded into the data structure. Thus, no information needs to be included in relation to sensors for which no event has been detected during the time frame.

According to an embodiment, each data entry codes an up event or a down event, wherein the data entry uses different data values for different channels of the ADCs, wherein the up event represents the value of the sensor increasing above an upper threshold and the down event represents the value of the sensor decreasing below a lower threshold.

Up events and down events may easily be provided from LC-ADCs, which are adapted to compare sensor input to upper and lower thresholds. The upper threshold and the lower threshold may be defined in relation to the previous value of the signal from the sensor.

The data entry may have different values, i.e., different sequences of bits, in dependence of which channel of the ADC for which the event occurred. Thus, thanks to the coding of information of the channel of the ADC and whether the event is an up event or a down event through the value of the data entry, the information may be coded in a very compact manner, such that the size of the data structure may be small.

According to an embodiment, the data structure comprises a plurality of data entries corresponding to a plurality of events of a single channel in dependence of the value of the sensor corresponding to a plurality of up events and/or a plurality of down events during the time frame.

Thus, if the value of the analog signal of the sensor (associated with the single channel) crosses a plurality of levels (corresponding to a change of a plurality of bits), a plurality of events may be coded into the data packet. This implies that a single data entry always indicates a change of a value of one bit and that a plurality of data entries needs to be provided if a large change in the value of the signal of the sensor occurs.

Hence, the magnitude of change is not coded into the data entry. This implies that each data entry needs fewer bits, since the data entry does not need to provide a magnitude of change. Hence, the single data entry may require fewer bits, such that the size of the data packet is small if only changes of one bit are indicated in the data packet. This is particularly useful if large changes in values of the signal are rare.

According to an embodiment, the data structure comprises at least one header preceding one or more data entries representing one or more events detected by a single ADC.

Thus, the data structure may provide a header that indicates that data entries from a single ADC will follow. The at least one header may be provided in the data structure between data entries relating to different ADCs such that a decoder reading the data structure is able to deduce which data entries relate to which ADC.

The at least one header may provide a sequence of bits allowing the at least one header to be distinguished from event information coded by data entries. For instance, the at least one header may be provided as a specific code that differs from the values coded by the data entries. Alternatively, two headers may be provided which correspond to a combination of codes which will not occur in representation of the changes to the signal values of the sensors. For instance, the two headers may code an up event followed by a down event for the same channel of the ADC. As it may be assumed, that the same channel will not go through an up event and a down event in the same time frame, such codes of the two headers may allow the headers to be distinguished from the data entries.

The data structure may also comprise at least one time indication header. This may be used if the data structure represents signal values for more than one point in time, i.e., for multiple clock samples. In such case, the data structure may have a time indication header preceding data entries representing signal values for a single point in time.

According to an embodiment, the data structure comprises a preamble for identifying that one or more data entries representing event information follow in the data structure.

The preamble may be used for allowing a receiver to safely receive the data structure. Since data structures may not be generated during each time frame, a receiver may not know when a data structure is to be expected. Hence, by using a preamble, the receiver may be able to detect the data structure that is arriving at the receiver so as to be able to safely detect the data structure.

The preamble may according to an example comprise a sequence of "ones", i.e., bits having a value of "1". This may imply that a signal that carries the data structure has a high value during the preamble allowing a receiver to detect the receipt of the data structure over a noise level.

The preamble may be followed by a header preceding data entries for an ADC. A first bit of the header may have a value of "0", which may allow the receiver to identify the first bit of the header even if the entire preamble was not detected by the receiver.

According to an embodiment, the data structure is stored on a tangible computer-readable medium. The data structure may be stored in a memory of the device for packetizing of data from a set of sensors, before the device transmits the data structure to the receiver. The data structure may also be stored in a memory of the receiver, after the data structure has been received by the receiver.

According to a second aspect, there is provided a method for packetizing of data from a set of sensors, said method comprising: receiving, by each of a plurality of analog-to-digital converters (ADCs), input from a subset of one or more sensors, wherein each ADC comprises one or more channels, wherein each channel is dedicated to a respective sensor in the subset; detecting, by the ADCs, events, wherein each event corresponds to a change in a value of a sensor; in response to at least one event being detected in a time frame, providing an enable signal to a clock generator for initiating generation of a clock signal; providing the clock signal to an event serializer; and generating, by the event serializer, a data packet comprising event information representing the detected events.

Effects and features of this second aspect are largely analogous to those described above in connection with the first aspect.

Embodiments mentioned in relation to the second aspect are largely compatible with the first aspect.

The method for packetizing of data thus initiates generation of a clock signal only when there is data to be transmitted. This implies that the method can use the clock generator intermittently such that power consumption of the method may be saved.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 is a schematic view of a device according to an embodiment.
Fig. 2 is a more detailed schematic view of the device of Fig. 1.
Fig. 3 is a schematic view of a data structure according to an embodiment.
Fig. 4 is a flow chart of a method according to an embodiment.

### Detailed description

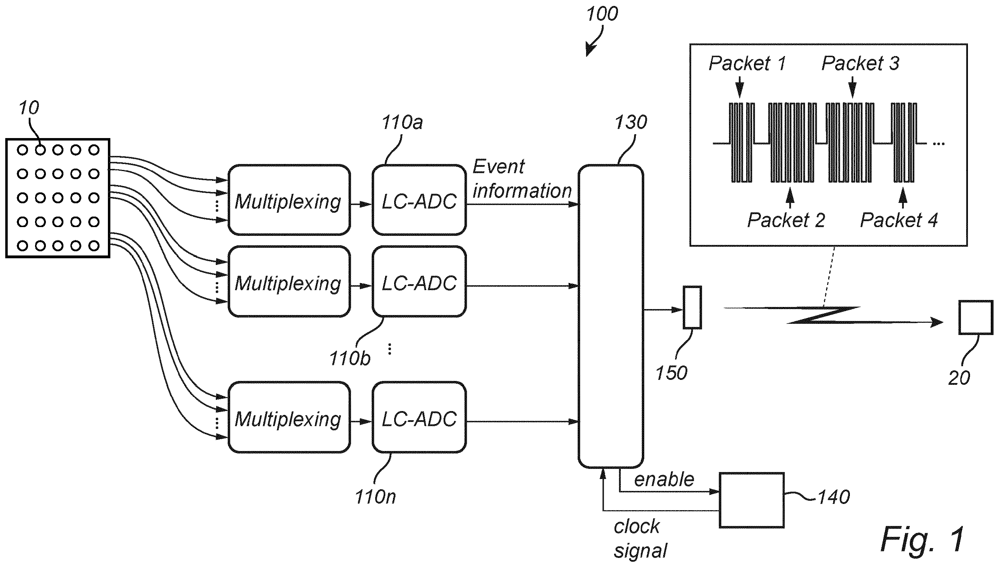

Fig. 1 illustrates a device 100 for packetizing of data from a set of sensors 10.

As indicated in Fig. 1, the set of sensors 10 may for instance be configured to detect a biological signal, such as an electrical signal propagating through a nerve. Thus, the set of sensors 10 may comprise electrodes configured to detect electrical signals from biological tissue. However, it should be realized that the set of sensors 10 may comprise other types of sensors, such as photo-sensitive elements configured to detect an optical signal or elements sensitive to a magnetic signal or a vibrational signal. Each sensor 10 in the set may be identical, such that the sensors 10 may be configured to detect a common type of signal. However, the sensors 10 in the set may alternatively be of different types.

The device 100 is configured to receive input from the set of sensors. The input may be provided to a plurality of analog-to-digital converters (ADCs) 110a, 110b, ..., 110n. Each ADC 110a-n may be connected to a subset of sensors 10. The subset of sensors 10 may comprise one sensor. However, as shown in Fig. 1, the subset of sensors 10 may comprise a plurality of sensors 10, such that the ADC 110a-n may receive input from the subset of sensors in a time-multiplexed manner.

Thanks to each of the ADCs 110a-n being connected to a plurality of sensors 10 in respective subsets, the ADCs 110a-n may be shared by the plurality of sensors 10 in the subsets. This implies that the device 100 may be implemented in a small area and may be very compact, since there is no need for providing separate ADC circuitries for each of the sensors 10 in the set.

Each ADC 110a-n may output information in channels, wherein each channel is dedicated to a respective, single sensor 10. Thus, information from different sensors in the subset may be distinguished based on channel information.

The ADCs 110a-n are configured to detect events in input signals received from the sensors 10. Thus, each ADC 110a-n may be configured to detect changes in a value of an analog signal from a sensor 10, wherein such a change may correspond to an event.

The ADCs 110a-n may be specifically adapted for detecting events. According to an embodiment, the ADCs 110a-n may be configured as level-crossing ADCs (LC-ADCs), which are configured to detect whether a value of a signal is above an upper threshold or below a lower threshold set in relation to a previous value of the signal. However, it should be realized that the ADCs 110a-n may be configured to detect events in another manner, such as the ADCs 110a-n comprising a comparator which determines whether an event has occurred after the value of the signal has been converted to digital format. According to another alternative, the ADCs may be ADCs configured to operate at Nyquist rate (Nyquist-rate ADCs). The Nyquist-rate ADC may further be combined with a delta modulator such that the delta modulator provides an output only when a value of a signal input to the Nyquist-rate ADC changes.

The device 100 further comprises a serializer 130 for generating a data packet representing the information acquired by the set of sensors 10. The data packet may be configured to include event information generated during a time frame.

The device 100 may thus be configured to continuously monitor input signals from the set of sensors 10, in a sequence of time frames.

Each time frame may correspond to a time duration during which one signal from one sensor is received by an ADC 110a-n. Hence, during a first time frame, each ADC 110a-n receives input from a respective first sensor in the respective subset and determines whether an event is detected. Then, during a second time frame following the first time frame, each ADC 110a-n receives input from a respective second sensor in the respective subset and determines whether an event is detected. Thus, different sensors may provide input in different time frames.

According to an alternative, each time frame may correspond to a time duration during which each ADC 110a-n performs one cycle of time-multiplexing, i.e., each ADC 110a-n receives input once from each sensor in the respective subset during the time frame. The ADC 110a-n may thus detect any event information in the signals from any of the sensors during the time frame.

It should be realized that each time frame may further correspond to the ADCs 110a-n performing more than one cycle of time-multiplexing. However, this may imply that the device 100 may further need to, in the data packet, indicate to which cycle of time-multiplexing each detected event belongs.

The time duration allocated to each sensor during one cycle of time-multiplexing may be relatively short. Thus, the ADC 110a-n may be configured to determine a single value for the analog signal of the sensor during the time duration allocated to the sensor. Hence, only one value may be determined for each sensor during a cycle of time-multiplexing. In addition, if there is no change to the value of the signal of the sensor, no event is detected and no information for the sensor needs to be generated or stored.

The change in a value of the signal of a sensor corresponding to an event may correspond to the value of the analog signal being changed such that it is no longer represented by a same digital value. Thus, the change in the value of the signal may imply that the least significant bit of the digital value representing the analog signal changes or that further bit(s) are changed.

The upper threshold and the lower threshold of an LC-ADC may be set to correspond to the digital value representing the analog signal being incremented by one or decremented by one. The LC-ADCs may be configured to generate an up event in dependence of the value of the sensor increasing above an upper threshold. Thus, an up event may be generated if the digital value is incremented by one. The LC-ADCs may be configured to generate a down event in dependence of the value of the sensor decreasing below a lower threshold. Thus, a down event may be generated if the digital value is decremented by one.

If the digital value changes by more than one bit, the ADC 110a-n may detect a plurality of events corresponding to the number of increments or decrements by one that represents the change of the digital value. Thus, if a large increase of the analog signal occurs, a plurality of up events may be generated, each up event indicating an increase of the digital value by one bit. Similarly, if a large decrease of the analog signal occurs, a plurality of down events may be generated, each down event indicating a decrease of the digital value by one bit.

The serializer 130 may be configured to generate a data packet representing the event information detected by the ADCs 110a-n during a time frame.

The device 100 further comprises a clock generator 140. The clock generator 140 may be configured to generate a clock signal which is provided to the serializer 130 for controlling generating of the data packet by the serializer 130.

The serializer 130 may need to generate the data packet in a fast manner, such that the data packet representing information from a time frame is completely generated during a following time frame. Thus, the serializer 130 may need to receive a clock signal having a high frequency. However, the ADCs 110a-n do not need such a high frequency clock signal. Rather, the ADCs 110a-n may receive a low frequency clock signal, which may even be generated externally to an integrated circuit implementing the ADCs 110a-n. The low frequency clock signal may be configured to control detection of events by the ADCs 110a-n.

The high frequency clock signal that controls the serializer 130 may thus only be needed when a data packet is to be generated. Since the device 100 is configured to represent information from the set of sensors 10 as event information, the device 100 may not need to output any information in each time frame. Thus, the high frequency clock signal may only need to be provided in relation to the time frames in which there is any event information to be output from the ADCs 110a-n. This implies that power consumption may be substantially reduced by ensuring that the clock generator 140 only generates the clock signal when needed.

In addition, the data to be provided into the data packet is compressed, since the data packet only provides data relating to events and hence only provides data for the channels of the ADCs 110a-n that carry any information of interest. By ensuring that size of the data packets is small, power consumption is also reduced.

The device 100 may be configured to provide a trigger to the clock generator 140 when event information is available for being arranged into a data packet. Thus, the clock generator 140 may be configured to receive an enable signal that may initiate generation of the clock signal by the clock generator 140. The serializer 130 may receive an indication from the ADCs 110a-n that event information has been detected during a time frame. In response, the serializer 130 may generate an enable signal and provide the enable signal to the clock generator 140. However, it should be realized that the enable signal may be provided in a different manner to the clock generator 140. For instance, the enable signal may be provided directly from the ADCs 110a-n to the clock generator 140, or from a memory in which the event information is stored or from a controller which may be configured to control storing of information from the ADCs 110a-n into memory. The enable signal need only be provided if any event is detected during a time frame. Thus, the clock generator 140 may only receive the enable signal after the time frame if any event has been detected during the time frame.

The clock generator 140 may thus initiate generation of the clock signal when the enable signal is received. The clock generator 140 may have a short start-up time after initiating generation of the clock signal before a stable clock signal is provided. The device 100 may be configured to wait for the clock signal to be stable before starting to use the clock signal. For instance, the clock generator 140 may be configured not to output the clock signal until it has been stabilized.

The clock generator 140 is configured to provide the clock signal to the serializer 130 for generating the data packet. Upon receiving the clock signal, the serializer 130 may be configured to collect event information generated from each of the ADCs 110a-n. The serializer 130 may be configured to form a sequence of bits for the data packet, wherein event information of different events is arranged sequentially in the sequence of bits.

Thus, the serializer 130 is configured to generate a data packet comprising one or more data entries. Each data entry represents information from one channel of the ADCs 110a-n.

Each data entry may represent an up event or a down event for the channel. The device 100 may be configured to provide different data values for coding events for different channels of the ADCs 110a-n. Thus, the value coded in the data entry may indicate both which channel of an ADC 110a-n that the data entry relates to and whether the event is an up event or a down event. This may be an efficient manner of providing event information such that a size of the data packet may be small.

It should be realized that even though description is mainly made in relation to event information being provided as up and down events and coded into the data packet in such manner, the device 100 may alternatively be configured to code event information in another manner. The device 100 may for instance be configured to code an absolute value of the signal of the sensor 10 for which an event is detected during the time frame into the data packet. This may not be as efficient from a point of view of compressing data. However, the device 100 may still be able to provide a low power consumption due to only using the clock generator 140 intermittently and the data packet may still be relatively small in that the data packet only includes information for some of the channels of the ADCs 110a-n. Thus, the number of data entries in the data packet is dependent on the number of events during a time frame and, hence, the size of the data packet is adjusted to the amount of information to be provided in the data packet.

The device 100 is configured to output the data packet in real time after the data packet has been generated. The serializer 130 may thus be configured to transfer the data packet to a communication unit 150 which may output the data packet to an external unit 20. The external unit 20 may comprise the receiver that is configured to receive the data packet from the device 100. For instance, the serializer 130 may be configured to provide a bitstream of the data packet to a buffer associated with the communication unit 150. The communication unit 150 could for instance be an event-based low-voltage differential signaling (LVDS) driver for providing communication with the external unit 20.

The device 100 may be configured to generate the data packet after the time frame in which events are detected. Thus, during a time frame following the time frame in which event(s) are detected, the data packet may be generated and thereafter output.

This implies that the device 100 may not need to provide a time stamp in the data packet. Rather, the external unit 20 may know a timing of the information from the sensors 10 based on a time of receipt of the data packet. Further, no clock synchronization between the device 100 and the external unit 20 may be needed, such that complicated clock synchronization is avoided and power consumption of the device 100 is thus saved.

The device 100 may need to be able to form the data packet during the time frame following the time frame in which event(s) are detected. This implies that storing of event information is only temporarily needed. Hence, a memory capacity of the device 100 may be limited without any risk of losing information acquired by the set of sensors 10.

The clock generator 140 may thus generate a high frequency clock signal so as to allow the data packet to be generated in a sufficiently fast manner. This may imply that the clock signal may have a frequency that is equal to or larger than a maximum number of bits of the data packet representing the event information in the time frame multiplied by a frame rate of the time frames. However, it should be realized that in most cases, the data packet may be much smaller than the maximum number of bits. For instance, the data packet may normally only provide event information for a few channels. Thus, the clock signal may not be set to a worst-case scenario. This may further imply that power consumption is reduced.

Instead, the device 100 may further comprise an overload detector, which may be configured to detect if the device 100 will not be able to finish the data packet in time. The clock generator 140 may then be configured to provide a tunable frequency of the clock signal. The clock generator 140 may further be configured to increase the frequency of the clock signal at an end part of a time frame and/or during a subsequent time frame, based on input from the overload detector that the data packet has not been finished.

The device 100 may further be configured to provide a signal for turning off the clock generator 140 when the data packet has been generated and output from the serializer 130. The signal for turning off the clock generator 140 may be provided in a similar manner as the signal for initiating generation of the clock signal. For instance, the clock generator may be configured to be turned off based on the enable signal going low. Thus, the enable signal may be held high as long as the clock signal is to be provided by the clock generator 140.

Thus, output of the clock signal by the clock generator 140 may be terminated when the data packet has been generated. It should be realized that the output of the clock signal may be terminated without the clock generator 140 being completely turned off. Thus, the clock generator 140 may consume some power while the clock signal is not being output. This may be used for saving power consumption but still ensuring that the clock generator 140 may be very quickly started for providing a stable clock signal quickly after receiving the enable signal.

The device 100 may be configured to provide event information from each ADC 110a-n to a multiplexer which may be used by the serializer 130 for forming the data packet. Thus, the device 100 may not need any memory for storing event information. Rather, event information may be provided into the data packet as it is generated.

This may however require that a data packet is generated every time that a channel of an ADC 110a-n detects event information. Thus, the time frame represented by the data packet may correspond to a time duration during which one signal from one sensor is received by each ADC 110a-n.

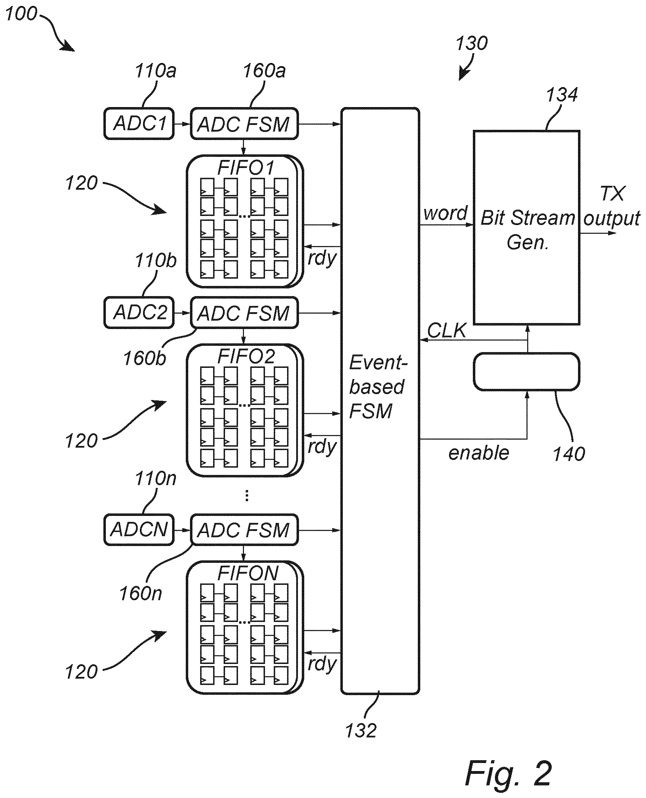

Referring now to Fig. 2, further details of the device 100 will be discussed in relation to the embodiment shown in Fig. 2.

The device 100 may comprise a memory 120. The memory 120 is configured to store event information from each of the ADCs 110a-n. The memory 120 may have separate parts dedicated to different ADCs 110a-n.

The ADCs 110a-n may be configured to output event information detected by the ADCs 110a-n into the memory 120. The event information may be stored in the same manner as it is later coded in data entry in the data packet. Thus, the event information may be provided as a digital value that represents an up event or a down event and also has different values for different channels so as to simultaneously indicate for which channel of the ADC 110a-n that the up event or down event was detected.

The event information may be stored by storing a plurality of events if the plurality of events corresponding to the number of increments or decrements by one that represents the change of the digital value. The event information may alternatively be stored by storing a single event corresponding to a single change in the value of the signal of the sensor. Thus, if the change corresponds to the digital value changing by more than one bit, the event information may be stored with information of the direction (up/down) and magnitude of the change.

The serializer 130 may be configured to generate the data packet comprising the event information stored into the memory 120 during the time frame. However, it should be realized that the event information may possibly be converted when being transferred from the memory 120 into the data packet. For instance, if the event information is stored as a single event comprising a direction and magnitude of the change, the event information may be converted to a plurality of events, each indicating an increment or decrement of the signal value by one bit. The converted format of the event information may then be used in the generated data packet.

The memory 120 may be a volatile memory, such as a random-access memory, or may be a non-volatile memory, such as a flash memory.

The ADCs 110a-n may be configured to output the event information into first set of memory addresses. Thus, information being recorded during a time frame is stored in the first set of memory addresses. At end of the time frame, the event information stored during the time frame may be copied to a second set of memory addresses. The event information may thus be held in the second set of memory addresses for allowing the event information to be read from the second set of memory addresses for generating the data packet.

The first set of memory addresses may thus be overwritten by event information during a following time frame, without preventing the event information of the previous time frame to be provided into the data packet.

The first set of memory addresses and the second set of memory addresses may handle information according to a first-in first-out (FIFO) scheme.

As mentioned above, the memory 120 may have separate parts dedicated to different ADCs 110a-n. Thus, each part may have a part of the first set of memory addresses and a part of the second set of memory addresses.

The device 100 may comprise a plurality of ADC finite state machines (ADC FSMs) 160a-n. Each ADC FSM 160a-n may be associated with a respective ADC. The ADC FSM 160a-n may provide control to ensure that output from the ADC is stored into the memory 120 when the output corresponds to event information. The ADC FSM 160a-n may further provide a trigger signal to the serializer 130 so as to indicate to the serializer 130 when the ADC 110a-n has detected event information.

The serializer 130 may include an event-based FSM 132. The event-based FSM 132 may be configured to output the enable signal to the clock generator 140, in response to receiving information from at least one of the ADC FSMs 160a-n that event information has been detected during a time frame.

Thus, the clock generator 140 may initiate generation of the clock signal based on receiving the enable signal from the serializer 130. The clock signal may then be provided to the event-based FSM 132 allowing reading of the event information from the memory 120 in a fast manner.

The event-based FSM 132 may then send triggers to the memory 120 for pushing event information from the memory 120 to the event-based FSM 132 allowing the data packet to be formed. When a current event information has been processed, a new trigger may be sent to the memory 120 for pushing the next event information to the event-based FSM 132.

Triggers may be sequentially sent by the event-based FSM 132 to different parts of the memory 120 associated with different ADCs 110a-n. Thus, the event information from all of the ADCs 110a-n may be sequentially pushed from the memory 120 to the event-based FSM 132.

The information received by the event-based FSM 132 may be further provided to a bit stream generator 134 which forms the data packet based on the information received from the event-based FSM 132. The bit stream generator 134 may further receive the clock signal from the clock generator 140 for ensuring fast processing of the information by the bit stream generator 134.

The bit stream generator 134 may further output the data packet, e.g., for transmission to the external unit 20.

The device 100 may be implemented as an integrated circuit. In particular, the device 100 may be implemented as an Application-Specific Integrated Circuit (ASIC) or a Field-Programmable Gate Array (FPGA). However, the device 100 is not necessarily implemented in a single integrated circuit. In embodiments, the device 100 may comprise two or more integrated circuits, distributing components of the device 100 over the two or more integrated circuits.

The device 100 may be arranged in a common housing with the set of sensors 10. The device 100 may alternatively be arranged in a separate housing, wherein the device 100 is arranged to receive signals directly through a wired connection from the set of sensors 10. The device 100 is preferably arranged close to the set of sensors 10 in order to ensure that signals from the set of sensors 10 may be transferred a short distance between the set of sensors 10 and the ADCs 110a-n. This implies that power consumption for transfer of signals may be low.

The device 100 may be arranged in a housing having limited power capacity, such as being powered by a battery. This may especially be needed as the device 100 may be arranged close to the set of sensors 10 or even integrated with the set of sensors 10. Therefore, the intermittent use of the clock generator provided by the device 100 may be highly advantageous, since low power consumption of the device 100 may be very important for ensuring a long lifetime of the device 100.

The set of sensors 10 may for instance be configured to detect a biological signal. Thus, the set of sensors 10 may be worn or implanted in a body of a human or animal being. The device 100 may be arranged in a housing that may be worn to allow the device 100 to be arranged close to the set of sensors 10 allowing wired transfer or short-range wireless transfer of signals from the set of sensors 10 to the device 100.

The device 100 may further be configured to communicate with the external unit 20 over a short range. Thus, the device 100 may provide direct communication with the external unit 20 using wired communication or short-range wireless communication. This may ensure that a time required for the transfer of the data packet from the device 100 to the external unit 20 may always be the same or substantially the same. Hence, the device 100 may not need to provide a time stamp for the data packet. Rather, the data packets may be immediately transmitted to the external unit 20, which may then be able to relate the data packets in time to each other based on a time of receipt of the data packets. This implies that no clock synchronization between the device 100 and the external unit 20 is needed and allows the clock generator 140 to generate the clock signal intermittently without a need of knowing a time that has passed between generation of sequential data packets.

While the external unit 20 may be external to the circuitry of the device 100, the external unit 20 may even be arranged in a common housing with the device 100.

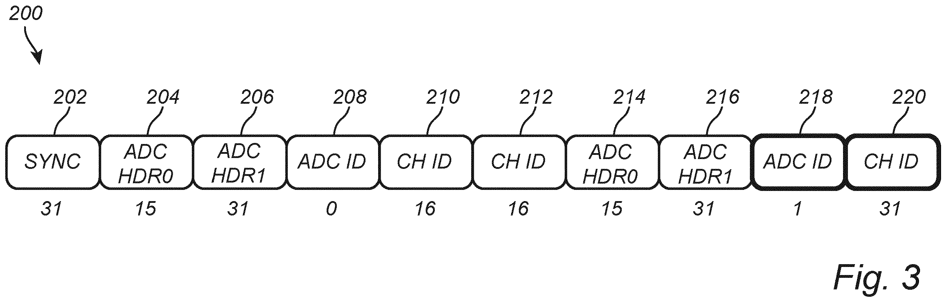

Referring now to Fig. 3, a data structure 200 that may be generated by the device 100 will be described in more detail.

The data structure 200 may provide a data packet that is compact and has a small size. In particular, the data structure 200 may allow the size to be adapted to the data that is to be transmitted. Hence, the data structure 200 may provide packetizing of data from a set of sensors 10 but only information from the sensors 10 for which event information is available will be included in the data structure 200.

Thus, the data structure 200 may comprise one or more data entries 210, 212, 220. If there are more than one data entries 210, 212, 220, the data entries 210, 212, 220 are arranged in a series in the data structure 200, i.e., the data structure 200 may be a sequence of bits, wherein the data entries 210, 212, 220 are arranged as different parts of the sequence of bits.

Each data entry 210, 212, 220 represents information from one channel of the ADCs 110a-n. Thus, each data entry 210, 212, 220 is associated with a single, specific channel. Each data entry 210, 212, 220 further represents an event corresponding to a change in a value of a signal of a sensor 10 associated with the channel.

The data structure 200 may carry a number of data entries 210, 212, 220 that is dependent on a number of events during a time frame. The data structure 200 may provide information of a single time frame. The data structure 200 may further only include information representing the events occurring during the time frame. Thus, the data structure 200 may not comprise any information relating to channels of the ADCs 110a-n for which no event information is detected during the time frame.

This implies that the data structure 200 may provide information in a compact manner ensuring that a small amount of data is needed for representing the data from the set of sensors 10. The small size of the data structure 200 ensures that power consumption is limited for generating the data structure 200, for transfer of the data structure 200 and for processing of the data structure 200. The small size of the data structure 200 also ensures that small memory capacity is needed in devices that process the data structure 200.

The data structure 200 may initially comprise a preamble 202. The preamble 202 may provide an indication that information from the set of sensors 10 follow in the data structure 200.

The preamble 202 may be a sequence of bits, each having a value of "1". This may imply that when the data structure 200 is transmitted to a receiver which may not know when to expect to receive the data structure 200, the receipt of the data structure 200 may be robustly determined over noise as a signal strength of the data structure 200 may be above a noise level.

It should however be noted that the device 100 may transmit a short message indicating that a data structure 200 is about to be transmitted. Thus, the receiver may expect to receive the data structure 200 and the preamble 202 may be shorter.

In the example shown in Fig. 3, the data structure 200 is divided into words, each corresponding to 5 bits. However, it should be realized that a different length of words may be used in dependence on the number of channels of each ADC 110a-n and the number of ADCs 110a-n. Also, each word indicated in the data structure 200 may not necessarily have the same length but may rather be adapted to the maximum values to be represented by the respective word.

The preamble 202 is indicated in Fig. 3 to represent the value "31" corresponding to 5 bits of value "1". It should be realized that the preamble 202 may alternatively represent other values.

The data structure 200 may further comprise at least one header 204, 206. The data structure 200 of the example in Fig. 3 comprises two headers 204, 206. The headers 204, 206 may precede one or more data entries representing event information from a single ADC 110a-n. Thus, information from the different ADCs 110a-n may be separated in the data structure 200 by the headers 204, 206.

The headers 204, 206 may code values which may not appear in combination within the data entries from a single ADC 110a-n. This allows the headers 204, 206 to be distinguished from the data entries representing event information.

Since the data structure 200 may have different length depending on the number of events to be coded by the data structure 200, the data structure 200 may need to provide an indication to allow the data entries of the data structure 200 to be properly associated with correct ADCs 110a-n. Therefore, the headers 204, 206 are provided to separate data entries from different ADCs 110a-n in the data structure 200.

The headers 204, 206 may for instance code a down event followed by an up event for the same channel of an ADC 110a-n. If each data structure 200 only represents a single value of the signal from a sensor 10, the same channel may not have both a down event and an up event in the same data structure 200. Thus, this scheme of the headers 204, 206 may ensure that the headers 204, 206 are distinguished from data entries representing event information.

As shown in Fig. 3, the first header 204 may represent a value of 15 corresponding to a down event of channel number 15 and the second header 206 may represent a value of 31 corresponding to an up event of channel number 15. However, it should be realized that the first and second headers 204, 206 may alternatively represent a down event and an up event of a different channel, such as representing values 0 and 16 corresponding to a down event of channel number 0 and an up event of channel number 0.

The data structure 200 may further comprise an ADC indication 208 of the ADC 110a-n for which the following data entries apply. The ADC indication 208 may simply provide an identifier of the ADC 110a-n. For instance, if the data structure 200 represents 32 ADCs 110a-n, these may be identified by numbers 0-31.

In the example of Fig. 3, the ADC indication 208 codes a value 0, indicating that the following data entries apply to the channels of the ADC 110a, which may be identified by number 0.

The data structure 200 may further comprise one or more data entries 210, 212 that follow the ADC indication 208 and provide event information relating to the channels of the ADC 110a.

Each data entry 210 may code an up event or a down event, wherein the data entry uses different data values for different channels of the ADCs 110a-n.

The up event represents the value of the signal provided by the sensor increasing above an upper threshold and the down event represents the value of the signal provided by the sensor decreasing below a lower threshold. The upper threshold and the lower threshold may be set to correspond to a change of one bit of a digital value representing the sensor signal.

The value of the data entry 210, 212 may indicate which channel that the event information applies to and direction of the change of the signal provided by the sensor associated with that channel. Thus, the data entry 210, 212 uses different data values for different channels of the ADCs 110a-n. For example, the data entry 210, 212 may use values CH corresponding to the channel number to represent a down event of the respective channel number and values of CH + N, where N is the number of channels, to represent an up event. Thus, if the ADC 110a-n has 16 channels, the down event of the channels may be represented by values 0-15 and the up event of the channels may be represented by values 16-31.

The data structure 200 may comprise a plurality of data entries 210, 212 corresponding to a plurality of events of a single channel. Thus, if a magnitude of change of the value of the signal of a sensor 10 is larger than one bit, a plurality of data entries may be used for representing the change. This implies that a number of data entries to represent the change may be equal to the magnitude of change as represented in digital format. This implies that a data entry 210, 212 does not need to indicate a magnitude of change. Rather, if a large change occurs, a plurality of data entries 210, 212 is used to represent the change. In other words, the number of a plurality of data entries for representing the change is dependent of the value of the signal of the sensor corresponding to a plurality of up events or a plurality of down events during the time frame.

As shown in Fig. 3, the data entries 210, 212 each have a value of 16 corresponding to an up event of channel 0. Thus, two up events are coded by the data entries 210, 212 corresponding to the value of the signal of the sensor associated with channel 0 increasing by two bits.

It should be realized that if the ADCs 110a-n are only associated with a single sensor each, the ADCs 110a-n may each have a single channel. This implies that there may be no need to differentiate between different channels such that the data entries 210, 212 may not need to provide any indication as to which channel the event information belongs to. In such case, a down event may simply be represented by one bit, which may for instance be set to "0", and an up event may also be represented by one bit, which may for instance be set to "1".

As further shown in Fig. 3, headers 214, 216 are included in the data structure 200 following the data entries 210, 212. The headers 214, 216 indicate that no further event information is provided for ADC 110a identified by number 0. Rather, the headers 214, 216 indicate that one or more data entries 220 representing event information from another ADC 110a-n will follow.

All headers in the data structure 200 may be provided in the same manner such that a receiver may always recognize the headers. Thus, the headers 214, 216 may represent values of 15 and 31, i.e., the same values as headers 204, 206.

The data structure 200 may further comprise a new ADC indication 218 of the ADC 110a-n for which the following data entries apply. In the example of Fig. 3, the ADC indication 218 codes a value 1, indicating that the following data entries apply to the channels of the ADC 110b, which may be identified by number 1.

The data structure 200 may further comprise one or more data entries 220 that follow the ADC indication 218 and provide event information relating to the channels of the ADC 110b. In the example of Fig. 3, the data structure 200 comprises a data entry 220 having a value of 1, corresponding to a down event of channel number 1.

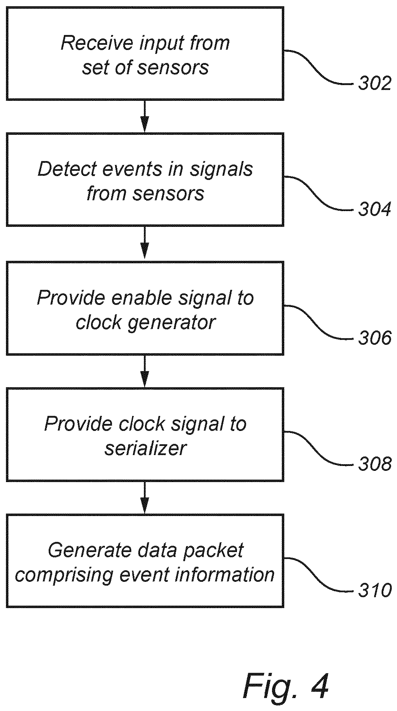

Referring now to Fig. 4, a method for packetizing of data from a set of sensors 10 is described. The method may for instance be performed by the device 100 described above.

The method comprises receiving 302, by each of a plurality of ADCs, input from a subset of one or more sensors, wherein each ADC comprises one or more channels, wherein each channel is dedicated to a respective sensor in the subset. Thus, the method may use a plurality of ADCs for receiving input from the set of sensors.

The method further comprises detecting 304, by the ADCs, events, wherein each event corresponds to a change in a value of a sensor. The ADCs may be adapted for detecting events. This may allow power efficient processing by the ADCs, in particular if the sensors provide sparse data (the signals from the sensors only change value infrequently). For instance, the ADCs may be level-crossing ADCs.

The method may comprise indicating by the ADCs that an event has occurred during a time frame. The method may be set up to evaluate at regular intervals (time frames) whether there is any data from the sensors to be provided into a data packet. Thus, the indication from the ADCs that an event has occurred during a time frame is used for triggering generation of a data packet representing event information of the events occurring during the time frame.

The method further comprises in response to at least one event being detected in a time frame, providing 306 an enable signal to a clock generator for initiating generation of a clock signal. Thus, at end of a time frame in which at least one event has been detected, the enable signal may be provided to the clock generator.

The method further comprises providing 308 the clock signal to an event serializer. The clock generator may provide a clock signal having a sufficiently large frequency to allow the data packet representing event information of a time frame to be formed during a following time frame. Thanks to the clock generator only being initiated when event information is available, power consumption may be saved.

The method further comprises generating 310, by the event serializer, a data packet comprising event information representing the detected events. Thus, the event serializer may combine event information from all of the ADCs into a data packet representing event information of all events during a time frame. The event serializer may receive the clock signal from the clock generator ensuring that the event serializer may form the data packet in a fast manner.

The method may further comprise turning off the clock generator after the data packet has been generated. Thus, the clock signal from the clock generator may only be intermittently output when needed during generation of data packets, such that power consumption may be saved. Thus, the clock generator may be turned off between generation of two successive data packets representing the signals from the sensors.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A device (100) for packetizing of data from a set of sensors (10), said device (100) comprising:
a plurality of analog-to-digital converters, ADCs, (110a-n), each connected to a subset of one or more sensors (10) for receiving input from the subset of sensors (10), wherein each ADC (110a-n) comprises one or more channels, wherein each channel is dedicated to a respective sensor (10) in the subset;
a serializer (130) for generating a data packet (200) comprising one data entry or a series of data entries (210, 212, 220), wherein the or each data entry (210, 212, 220) represents information from one channel of the ADCs (110a-n);
a clock generator (140) for generating a clock signal for controlling generating of the data packet (200) by the serializer (130);
wherein the ADCs (110a-n) are configured to detect events, wherein each event corresponds to a change in a value of a sensor (10), wherein the ADCs (110a-n) are configured to output event information, wherein the clock generator (140) is configured to receive an enable signal for initiating generation of a clock signal in response to at least one event being detected in a time frame; wherein the clock generator (140) is configured to provide the clock signal to the serializer (130) for generating the data packet (200), wherein the data packet (200) comprises the event information output by the ADCs (110a-n) during the time frame.

2. The device according to claim 1, wherein the device (100) further comprises a memory (120) configured to store information from each of the plurality of ADCs (110a-n), wherein the ADCs (110a-n) are configured to output the event information for storing the event information in the memory (120), and wherein the serializer (130) is configured to generate the data packet (200) comprising the event information stored into the memory (120) during the time frame.

3. The device according to claim 1 or 2, wherein each ADC (110a-n) is a level-crossing ADC, LC-ADC, wherein the LC-ADCs (110a-n) are configured to generate an up event in dependence of the value of the sensor (10) increasing above an upper threshold and a down event in dependence of the value of the sensor (10) decreasing below a lower threshold.

4. The device according to claim 3, wherein the serializer (130) is configured to code an up event and/or a down event using different data values for different channels of the LC-ADCs (110a-n).

5. The device according to claim 3 or 4, wherein the serializer (130) is configured to include a plurality of data entries (210, 212, 220) in the data packet (200) corresponding to a plurality of events of a single channel in dependence of the value of the sensor (10) corresponding to a plurality of up events and/or a plurality of down events during the time frame.

6. The device according to any one of the preceding claims, wherein the clock generator (140) is configured to be turned off for terminating output of the clock signal when the data packet (200) has been generated.

7. The device according to any one of the preceding claims, wherein the device (100) is configured to output the data packet (200) to an external device (20) in real time after the data packet (200) has been generated.

8. The device according to any one of the preceding claims, wherein the clock signal generated by the clock generator (140) is a high frequency clock signal and wherein the ADCs (110a-n) are configured to receive a low frequency clock signal for controlling detection of events by the ADCs (110an).

9. The device according to any one of the preceding claims, wherein the plurality of ADCs (110a-n) is configured to receive time-multiplexed input from each of a plurality of sensors (10) in the respective subsets during a time frame, and wherein the clock generator (140) is configured to receive the enable signal after the time frame in dependence of any event being detected during the time frame.

10. A method for packetizing of data from a set of sensors, said method comprising:
receiving (302), by each of a plurality of analog-to-digital converters, ADCs, input from a subset of one or more sensors, wherein each ADC comprises one or more channels, wherein each channel is dedicated to a respective sensor in the subset;
detecting (304), by the ADCs, events, wherein each event corresponds to a change in a value of a sensor;
in response to at least one event being detected in a time frame, providing (306) an enable signal to a clock generator for initiating generation of a clock signal;
providing (308) the clock signal to an event serializer; and
generating (310), by the event serializer, a data packet comprising event information representing the detected events.

## Patentansprüche

1. Vorrichtung (100) zum Paketieren von Daten von einer Menge von Sensoren (10), wobei die Vorrichtung (100) umfasst:
eine Vielzahl von Analog-Digital-Wandlern, ADCs, (110a-n), die jeweils mit einer Teilmenge von einem oder mehreren Sensoren (10) verbunden sind, um eine Eingabe von der Teilmenge von Sensoren (10) zu empfangen, wobei jeder ADC (110a-n) einen oder mehrere Kanäle umfasst, wobei jeder Kanal einem jeweiligen Sensor (10) in der Teilmenge gewidmet ist;
einen Serializer (130) zum Generieren eines Datenpakets (200), das einen einzigen Dateneintrag oder eine Reihe von Dateneinträgen (210, 212, 220) umfasst, wobei der oder jeder Dateneintrag (210, 212, 220) Informationen von einem Kanal der ADCs (110a-n) darstellt;
einen Taktgeber (140) zum Generieren eines Taktsignals zum Steuern des Generierens des Datenpakets (200) durch den Serializer (130);
wobei die ADCs (110a-n) dazu konfiguriert sind, Ereignisse zu detektieren, wobei jedes Ereignis einer Änderung eines Wertes eines Sensors (10) entspricht, wobei die ADCs (110a-n) dazu konfiguriert sind, Ereignisinformationen auszugeben, wobei der Taktgeber (140) dazu konfiguriert ist, ein Aktivierungssignal zum Einleiten des Generierens eines Taktsignals als Reaktion darauf, dass mindestens ein Ereignis in einem Zeitrahmen detektiert wird, zu empfangen; wobei der Taktgeber (140) dazu konfiguriert ist, das Taktsignal dem Serializer (130) zum Generieren des Datenpakets (200) bereitzustellen, wobei das Datenpaket (200) die Ereignisinformationen umfasst, die von den ADCs (110a-n) während des Zeitrahmens ausgegeben werden.

2. Vorrichtung nach Anspruch 1, wobei die Vorrichtung (100) ferner einen Speicher (120) umfasst, der dazu konfiguriert ist, Informationen aus jedem der Vielzahl von ADCs (110a-n) zu speichern, wobei die ADCs (110a-n) dazu konfiguriert sind, die Ereignisinformationen zum Speichern der Ereignisinformationen in dem Speicher (120) auszugeben, und wobei der Serializer (130) dazu konfiguriert ist, das Datenpaket (200), das die Ereignisinformationen umfasst, die in dem Speicher (120) gespeichert sind, während des Zeitrahmens zu generieren.

3. Vorrichtung nach Anspruch 1 oder 2, wobei jeder ADC (110a-n) ein pegelgesteuerter ADC, LC-ADC, ist, wobei die LC-ADCs (110a-n) dazu konfiguriert sind, ein Aufwärtsereignis in Abhängigkeit davon, dass der Wert des Sensors (10) über eine obere Schwelle ansteigt, und ein Abwärtsereignis in Abhängigkeit davon, dass der Wert des Sensors (10), unter eine untere Schwelle abnimmt, zu generieren.

4. Vorrichtung nach Anspruch 3, wobei der Serializer (130) dazu konfiguriert ist, ein Aufwärtsereignis und/oder ein Abwärtsereignis unter Verwendung unterschiedlicher Datenwerte für verschiedene Kanäle der LC-ADCs (110a-n) zu codieren.

5. Vorrichtung nach Anspruch 3 oder 4, wobei der Serializer (130) dazu konfiguriert ist, eine Vielzahl von Dateneinträgen (210, 212, 220) in das Datenpaket (200) einzubeziehen, die einer Vielzahl von Ereignissen eines einzelnen Kanals in Abhängigkeit davon, dass der Wert des Sensors (10) einer Vielzahl von Aufwärtsereignissen und/oder einer Vielzahl von Abwärtsereignissen während des Zeitrahmens entspricht.

6. Vorrichtung nach einem der vorhergehenden Ansprüche, wobei der Taktgeber (140) dazu konfiguriert ist, ausgeschaltet zu werden, um die Ausgabe des Taktsignals zu beenden, wenn das Datenpaket (200) generiert wurde.

7. Vorrichtung nach einem der vorhergehenden Ansprüche, wobei die Vorrichtung (100) dazu konfiguriert ist, das Datenpaket (200) an eine externe Vorrichtung (20) in Echtzeit auszugeben, nachdem das Datenpaket (200) generiert wurde.

8. Vorrichtung nach einem der vorhergehenden Ansprüche, wobei das Taktsignal, das durch den Taktgeber (140) generiert wird, ein Hochfrequenz-Taktsignal ist, und wobei die ADCs (110a-n) dazu konfiguriert sind, ein Niederfrequenz-Taktsignal zum Steuern der Detektion von Ereignissen durch die ADCs (110a-n) zu empfangen.

9. Vorrichtung nach einem der vorhergehenden Ansprüche, wobei die Vielzahl von ADCs (110a-n) dazu konfiguriert ist, eine Zeitmultiplex-Eingabe von jedem von einer Vielzahl Sensoren (10) in den jeweiligen Teilmengen während eines Zeitrahmens zu empfangen, und wobei der Taktgeber (140) dazu konfiguriert ist, das Aktivierungssignal nach dem Zeitrahmen in Abhängigkeit davon, dass ein beliebiges Ereignis während des Zeitrahmens detektiert wird, zu empfangen.

10. Verfahren zum Paketieren von Daten von einer Menge von Sensoren, wobei das Verfahren umfasst:
Empfangen (302), durch jeden einer Vielzahl von Analog-Digital-Wandlern, ADCs, einer Eingabe von einer Teilmenge von einem oder mehreren Sensoren, wobei jeder ADC einen oder mehrere Kanäle umfasst, wobei jeder Kanal einem jeweiligen Sensor in der Teilmenge gewidmet ist;
Detektieren (304), durch die ADCs, von Ereignissen, wobei jedes Ereignis einer Änderung eines Wertes eines Sensors entspricht;
als Reaktion darauf, dass mindestens ein Ereignis in einem Zeitrahmen detektiert wird, Bereitstellen (306) eines Aktivierungssignals für einen Taktgeber zum Einleiten des Generierens eines Taktsignals;
Bereitstellen (308) des Taktsignals für einen Ereignis-Serializer; und
Generieren (310), durch den Ereignis-Serializer, eines Datenpakets, das Ereignisinformationen umfasst, welche die detektierten Ereignisse darstellen.

## Revendications

1. Dispositif (100) de mise en paquets de données provenant d'un ensemble de capteurs (10), ledit dispositif (100) comprenant :
une pluralité de convertisseurs analogique-numérique, ADCs (110a-n), étant chacun connectés à un sous-ensemble d'un ou plusieurs capteurs (10) pour recevoir des données d'entrée provenant du sous-ensemble de capteurs (10), dans lequel chaque ADC (110a-n) comprend un ou plusieurs canaux, dans lequel chaque canal est dédié à un capteur respectif (10) du sous-ensemble ;
un sérialiseur (130) pour générer un paquet de données (200) comprenant une entrée de données ou une série d'entrées de données (210, 212, 220), dans lequel l'entrée de données ou chaque entrée de données (210, 212, 220) représente des informations provenant d'un canal des ADCs (110a-n) ;
un générateur d'horloge (140) pour générer un signal d'horloge pour commander la génération du paquet de données (200) par le sérialiseur (130) ;
dans lequel les ADCs (110a-n) sont configurés pour détecter des événements, dans lequel chaque événement correspond à un changement de valeur d'un capteur (10),
dans lequel les ADCs (110a-n) sont configurés pour délivrer des informations d'événement, dans lequel le générateur d'horloge (140) est configuré pour recevoir un signal d'activation afin de déclencher la génération d'un signal d'horloge en réponse à la détection d'au moins un événement au cours d'une période de temps;
dans lequel le générateur d'horloge (140) est configuré pour fournir le signal d'horloge au sérialiseur (130) pour la génération du paquet de données (200), dans lequel le paquet de données (200) comprend les informations d'événement délivrées par les ADCs (110a-n) au cours de la période de temps.

2. Dispositif selon la revendication 1, dans lequel le dispositif (100) comprend en outre une mémoire (120) configurée pour mémoriser des informations provenant de chacun de la pluralité de ADCs (110a-n), dans lequel les ADCs (110a-n) sont configurés pour fournir en sortie les informations d'événement afin de mémoriser les informations d'événement dans la mémoire (120) et dans lequel le sérialiseur (130) est configuré pour générer le paquet de données (200) comprenant les informations d'événement mémorisées dans la mémoire (120) au cours de la période de temps.

3. Dispositif selon la revendication 1 ou 2, dans lequel chaque ADC (110a-n) est un ADC à franchissement de seuil, LC-ADC, dans lequel les LC-ADCs (110a-n) sont configurés pour générer un événement de montée en fonction de l'augmentation de la valeur du capteur (10) au-dessus d'un seuil supérieur et un événement de descente en fonction de la diminution de la valeur du capteur (10) en dessous d'un seuil inférieur.

4. Dispositif selon la revendication 3, dans lequel le sérialiseur (130) est configuré pour coder un événement de montée et/ou un événement de descente en utilisant des valeurs de données différentes pour des canaux différents des LC-ADCs (110a-n).

5. Dispositif selon la revendication 3 ou 4, dans lequel le sérialiseur (130) est configuré pour inclure une pluralité d'entrées de données (210, 212, 220) dans le paquet de données (200) correspondant à une pluralité d'événements d'un canal unique, en fonction de la valeur du capteur (10) correspondant à une pluralité d'événements de montée et/ou à une pluralité d'événements de descente au cours de la période de temps.

6. Dispositif selon une quelconque des revendications précédentes, dans lequel le générateur d'horloge (140) est configuré pour être désactivé afin de mettre fin à la fourniture du signal d'horloge lorsque le paquet de données (200) a été généré.

7. Dispositif selon une quelconque des revendications précédentes, dans lequel le dispositif (100) est configuré pour transmettre le paquet de données (200) à un dispositif externe (20) en temps réel après la génération du paquet de données (200).

8. Dispositif selon une quelconque des revendications précédentes, dans lequel le signal d'horloge généré par le générateur d'horloge (140) est un signal d'horloge à haute fréquence et dans lequel les ADCs (110a-n) sont configurés pour recevoir un signal d'horloge à basse fréquence pour commander la détection d'événements par les ADCs (110a-n).

9. Dispositif selon une quelconque des revendications précédentes, dans lequel la pluralité d'ADCs (110a-n) est configurée pour recevoir une entrée multiplexée dans le temps provenant de chacun d'une pluralité de capteurs (10) dans les sous-ensembles respectifs au cours d'une fenêtre temporelle et dans lequel le générateur d'horloge (140) est configuré pour recevoir le signal d'activation après la fenêtre temporelle, en fonction de la détection éventuelle d'un événement au cours de la fenêtre temporelle.

10. Procédé de mise en paquets de données provenant d'un ensemble de capteurs, ledit procédé comprenant :
la réception (302), par chacun d'une pluralité de convertisseurs analogique-numérique (ADC), d'une entrée provenant d'un sous-ensemble d'un ou plusieurs capteurs, dans lequel chaque ADC comprend un ou plusieurs canaux, dans lequel chaque canal est dédié à un capteur respectif dans le sous-ensemble ;
la détection (304), par les ADCs, d'événements, dans lequel chaque événement correspond à un changement de valeur d'un capteur ;
en réponse à la détection d'au moins un événement au cours d'une fenêtre temporelle, la fourniture (306) d'un signal d'activation à un générateur d'horloge pour déclencher la génération d'un signal d'horloge ;
la fourniture (308) du signal d'horloge à un sérialiseur d'événements ; et
la génération (310), par le sérialiseur d'événements, d'un paquet de données comprenant des informations d'événement représentant les événements détectés.
